# EUROPÄISCHE PATENTSCHRIFT

(11) **EP 1 737 594 B1**
(45) Veröffentlichungstag und Bekanntmachung des Hinweises auf die Patenterteilung: **03.03.2010**
(21) Anmeldenummer: 05716297.6
(22) Anmeldetag: 22.03.2005
(51) Int. Cl.: B23B 31/30

(54) **HYDRAULIK-DEHNSPANNFUTTER**
HYDRAULIC EXPANDING CHUCK
MANDRIN DE SERRAGE HYDRAULIQUE EXPANSIBLE

(30) Priorität: 03.04.2004 DE 202004005321 U
(43) Veröffentlichungstag der Anmeldung: 03.01.2007
(73) Patentinhaber: KENNAMETAL INC., Latrobe, PA 15650-0231 (US)
(72) Erfinder: HERUD, Josef, Konrad, 91074 Herzogenaurach (DE)
(74) Vertreter: Freier, Rüdiger
(86) Internationale Anmeldenummer: PCT/EP2005/003048
(87) Internationale Veröffentlichungsnummer: WO 2005/097383

(56) Entgegenhaltungen:
- EP-A- 0 991 872
- WO-A-95/29029
- WO-A-98/39123
- WO-A-98/46896
- WO-A-02/070177
- DE-U1- 9 305 704
- DE-U1- 9 411 260
- US-B1- 6 179 530

## Beschreibung

Die Erfindung bezieht sich auf ein Hydraulik-Dehnspannfutter zum Einspannen eines Werkzeugs, insbesondere eines Bohrers oder Fräsers, nach dem Oberbegriff des Anspruchs 1.

Ein solches Hydraulik-Dehnspannfutter ist beispielweise aus WO 95/29 029 A bekannt.

Ein Spannfutter dient zur Verbindung eines drehangetriebenen Werkzeugs mit der Antriebsspindel einer Werkzeugmaschine. Ein Spannfutter weist deshalb eine ausgeprägte Spannfutterachse auf, um welche das Spannfutter und das darin eingespannte Werkzeug im Betrieb gedreht wird. In Richtung dieser Spannfutterachse hat ein Spannfutter stets ein werkzeugseitiges Ende, das zur Aufnahme des Werkzeugs vorgesehen ist, sowie ein maschinenseitiges Ende, welches zur Verbindung des Spannfutters mit der Antriebsspindel der Werkzeugmaschine ausgebildet ist. Eine an sich bekannte Gattung von Spannfuttern bilden die so genannten Hydraulik-Dehnspannfutter. Bei einem solchen Dehnspannfutter ist die Aufnahme für das Werkzeug durch eine dünnwandige Dehnbuchse gebildet. Die Dehnbuchse ist von einer Druckkammer umgeben, die mit einem Druckmedium, z.B. einem Öl, angefüllt ist. Die Dehnbuchse ist nun derart ausgebildet, dass sie bei Druckapplikation auf das Druckmedium elastisch radial verformt wird und dabei das eingesetzte Werkzeug einspannt. Ein Hydraulik-Dehnspannfutter hat insbesondere den Vorteil, dass es im Betrieb auftretende Schwingungen und Stöße dämpft. Hierdurch wird bei der Bearbeitung eine besonders hohe Oberflächengüte und eine lange Standzeit des Werkzeugs erreicht.

Aus der WO 03/095132 A1 ist ebenso ein solches Hydraulik-Dehnspannfutter bekannt. Bei dem bekannten Dehnspannfutter ist die Druckkammer zwischen einer einstückig mit einem Grundkörper ausgebildeten Dehnbuchse und einem auf den Grundkörper aufgeschraubten Spannring ausgebildet. Dabei kann durch Verschraubung des Spannringes gegenüber dem Grundkörper das Volumen der Druckkammer verkleinert oder vergrößert und somit das Druckmedium unter Drucks gesetzt bzw. entlastet werden.

Anders als bei dem vorstehend beschriebenen Spannfutter ist bei einem Dehnspannfutter häufig eine z.B. als Kolben/Zylinder-Einheit ausgebildete Druckerzeugungseinheit vorgesehen, die bezüglich der Druckkammer und d er Dehnbuchse in Richtung des werkzeugseitigen Endes axial versetzt angeordnet ist. Ein derartiges Dehnspannfutter ist beispielsweise aus der WO 98/39123 A1 bekannt. Zur Übertragung des Drucks von der Druckerzeugungseinrichtung in die Druckkammer ist bei diesem Spannfutter ein Ölleitsystem vorgesehen, das aus feinen, in das Spannfuttermaterial eingebrachten Verbindungsbohrungen besteht.

Ein auf eine Arbeitswelle aufgeschobenes Spannfutter mit einer sowohl radial nach außen als auch radial nach innen spannenden Dehnbuchse ist ferner aus der DE 743 530 C bekannt.

Besonders im Formen- und Gesenkbau werden sehr lange und schmale Spannfutter benötigt. Gängige Dehnspannfutter lassen sich in derart langen und schmalen Bauformen jedoch nicht mehr oder nur mit erheblichem Aufwand konstruieren. So ist bei einem besonders schmalen Dehnspannfutter ein beweglicher Spannring, wie er aus der WO 03/095132 A1 bekannt ist, aus Platzgründen nicht mehr anzubringen. Ebenso lässt sich eine Verbindungsbohrung, wie sie aus der WO 98/39123A1 zur Druckübermittlung bekannt sind, aufgrund der dünnen Wandstärke eines schmalen Spannfutters nicht mehr oder nur noch sehr aufwändig realisieren. Zudem steigt auch mit zunehmender Länge des Spannfutters der technische Aufwand zur Einbringung einer entsprechend längeren Verbindungsbohrung drastisch. Ein weiteres Problem ergibt sich dadurch, dass bei Druckapplikation auch im Bereich einer jeden Verbindungsbohrung Spannungen in das Material des Dehnspannfutters eingeleitet werden, die zu einer merklichen Verbiegung des Spannfutters und damit zu einer Beeinträchtigung des Rundlaufs des Werkzeugs führen können.

Der Erfindung liegt die Aufgabe zugrunde, ein Hydraulik-Dehnspannfutter anzugeben, das sich mit vergleichsweise geringem Aufwand in einer langen und schmalen Bauform realisieren lässt und sich durch vorteilhafte Anwendungseigenschaften auszeichnet.

Diese Aufgabe wird erfindungsgemäß gelöst durch die Merkmale des Anspruchs 1. Danach ist an dem werkzeugseitigen Ende des Dehnspannfutters eine Dehnbuchse zur Aufnahme und Einspannung eines Werkzeugs vorgesehen. Zur Erzeugung eines diese Dehnbuchse hydraulisch verformenden Drucks weist das Spannfutter eine Druckerzeugungseinheit auf, die axial zu der Dehnbuchse und der diese umgebenden Druckkammer versetzt angeordnet ist. Um den applizierten Druck über die axiale Distanz zwischen der Druckkammer und der Druckerzeugungseinheit zu übertragen, enthält das Dehnspannfutter ein Druckleitsystem, das erfindungsgemäß durch einen ringförmig geschlossenen und konzentrisch bezüglich der Spannfutterachse angeordneten Spalt oder Kanal ausgebildet ist. Die Druckkammer wird hierdurch durch das Druckleitsystem insbesondere übergangslos axial bis zu der Druckerzeugungseinheit hin verlängert.

Gegenüber einer gewöhnlichen Bohrung als Druckleitsystem weist ein Ringspalt bei vergleichbarer Querschnittsfläche eine im Allgemeinen wesentlich geringere radiale Ausdehnung auf. Ein Ringspalt mit zur Druckübertragung genügender Querschnittsfläche lässt sich daher platzsparend auch noch bei einem äußerst schmalen Dehnspannfutter anbringen. Darüber hinaus sind die im Bereich des ringförmigen Druckleitungssystems unter Druckapplikation in das Material des Spannfutters eingeleiteten Spannungen stets rotationssymmetrisch bezüglich der Spannfutterachse, so dass keine asymmetrische Verformung des Dehnspannfutters eintreten kann und somit der Rundlauf des Dehnspannfutters im Betrieb nicht beeinträchtigt wird.

Ein ringförmiges und konzentrisches Druckleitsystem ist besonders einfach realisierbar durch einen zweiteiligen Aufbau des Dehnspannfutters. Dieses umfasst in einer bevorzugten Ausführung der Erfindung einen zentralen Grundkörper, der an seinem werkzeugseitigen Ende die Dehnbuchse trägt, und eine werkzeugseitig auf diesen Grundkörper aufgestülpte Spannhülse. Durch geeignete Dimensionierung des Innendurchmessers der Spannhülse und des Außendurchmessers des Grundkörpers wird dabei erreicht, dass zwischen dem Grundkörper und der Spannhülse ein Ringspalt gebildet wird, der die Druckkammer und das axial anschließende Druckleitsystem bildet. Im Sinne einer einfachen und stabilen Konstruktion ist dabei bevorzugt vorgesehen, dass der Grundköper und die Spannhülse starr und druckdicht, insbesondere durch Hartlötung, miteinander verbunden sind.

Eine im Hinblick auf die Platzersparnis vorteilhafte Geometrie des Dehnspannfutters wird dadurch erreicht, dass die Druckerzeugungseinheit in der Spannhülse angeordnet ist. Vorteilhaft sowohl im Hinblick auf eine einfache Herstellung als auch im Hinblick auf eine einfache Handhabbarkeit des Dehnspannfutters ist eine Druckerzeugungseinheit mit einem Kolben/Zylinder-System. Dieses umfasst einen Druck kolben, der in einer Zylinderbohrung oder einer optional in eine solche Bohrung eingesetzten Hülse geführt ist. Eine einfache Befüllung der Druckkammer, des Druckleitsystems und der Druckerzeugungseinheit mit dem Druckmedium wird durch eine von der Zylinderbohrung abgewinkelte Befüllungsbohrung erreicht, welche die Zylinderbohrung mit dem Druckleitsystem verbindet. In einer besonders einfachen und effektiven Realisierung ist der Druckkolben mittels einer Spannschraube betätigbar.

In einer insbesondere für den Formen- und Gesenkbau vorteilhaften Bauform des erfindungsgemäßen Dehnspannfutters läuft die Spannhülse werkzeugseitig in einem langgestreckten, dünnen Halsbereich aus, dessen axiale Länge mindestens das Vierfache seines Außendurchmessers beträgt. Insbesondere beträgt die Länge dieses Halsbereichs mindestens 100 mm.

Ein besonderer Vorteil des erfindungsgemäßen Dehnspannfutte rs liegt darin, dass mit vergleichsweise geringem Aufwand eine sehr schmale Werkzeugaufnahme, gegebenen durch den Innendurchmesser der Dehnbuchse, erzielt werden kann. So beträgt der Innendurchmesser der Dehnbuchse bevorzugt 12 mm, kann jedoch auch wesentlich kleiner oder größer gewählt sein. Bei herkömmlichen Dehnspannfuttern ist zum Einspannen derart dünner Werkzeuge häufig ein in die Aufnahme des Spannfutters einsetzbares Reduzierstück für das Werkzeug erforderlich. Dieses kann sich nachteilig auf den Rundlauf des Werkzeugs auswirken.

Um eine effiziente Spannwirkung des Dehnspannfutters zu erreichen, wird als vorteilhaft erkannt, das Gesamtvolumen des ganzen Drucksystems, d. h. der Druckkammer, des Druckleitsystems und der Druckerzeugungseinrichtung, möglichst klein zu halten. Dies wird in einer vorteilhaften Weiterbildung der Erfindung dadurch erzielt, dass die radiale Ausdehnung des das Druckleitsystem und die Druckkammer bildenden Ringspalts sehr klein gewählt ist. Zweckmäßigerweise beträgt die Radialausdehnung des Ringspalts höchstens 0,2 mm, vorzugsweise etwa 0,1 mm. Diese äußerst dünne Ausbildung des Ringspalts ist außerdem platzsparend und somit vorteilhaft im Hinblick auf besonders schlanke Bauformen des Dehnspannfutters.

Die ringförmige Ausprägung des Druckleitsystems schafft Platz im zentralen Bereich des Dehnspannfutters, der folglich vorteilhaft für andere Zwecke genutzt werden kann. So ist in einer vorteilhaften Ausführung der Erfindung vorgesehen, den Grundkörper mit einer zentralen Durchführung zu versehen, die beispielsweise als Kühlmittelkanal genutzt werden kann.

In einer weiteren vorteilhaften Ausbildung der Erfindung ist eine Axialjustierungseinheit für das Werkzeug vorgesehen, die ebenfalls vorzugsweise im zentralen Bereich des Dehnspannfutters angeordnet ist. In zweckmäßiger Ausgestaltung umfasst diese Axialjustierungseinrichtung einen bezüglich dem Grundkörper axial verstellbaren Steilzapfen, der als axialer Anschlag für das einzuspannende Werkzeug dient und vorzugsweise in einer zentralen Bohrung des Grundkörpers geführt ist.

In einer konstruktiv besonders einfachen Ausführung ist der Stellzapfen im Grundkörper nach Art einer Schraube axial verstellbar. Dazu ist der Stellzapfen mit einem Außengewinde versehen, das mit einem Innengewinde der zentralen Bohrung des Grundkörpers zusammenwirkt.

In einer handhabungstechnisch besonders vorteilhaften Variante ist der Stellzapfen mittels einer radial zugänglichen Stellschraube verstellbar, so dass die Axialjustierung auch bei bereits eingelegtem Werkzeug bedient werden kann. Die bevorzugt in dem Grundkörper geführte Stellschraube ist dabei an ihrem inneren Ende mit einem Spiralgewinde versehen, das mit einer axial-linearen Zahnung des Stellzapfens kämmt.

Nachfolgend werden Ausführungsbeispiele der Erfindung anhand einer Zeichnung näher erläutert. Darin zeigen:
- Fig. 1: in perspektivischer Darstellung ein Hydraulik-Dehnspannfutter zum Einspannen eines Werkzeugs,
- Fig. 2: in Seitenansicht das Dehnspannfutter gemäß Fig. 1,
- Fig. 3: in einem Längsschnitt III-III das Dehnspannfutter gemäß Fig. 2,
- Fig. 4: in einem Querschnitt IV-IV das Dehnspannfutter gemäß Fig. 2,
- Fig. 5: in einer gegenüber Fig. 3 um die Spannfutterachse gedrehten Längs- schnittdarstellung das Dehnspannfutter gemäß Fig. 2 und
- Fig. 6: in einer Darstellung gemäß Fig. 5 das Dehnspannfutter mit einer alternativ ausgeführten Axialjustierungseinheit für das einzuspannende Werkzeug.

Einander entsprechende Teile und Größen sind in allen Figuren stets mit den gleichen Bezugszeichen versehen.

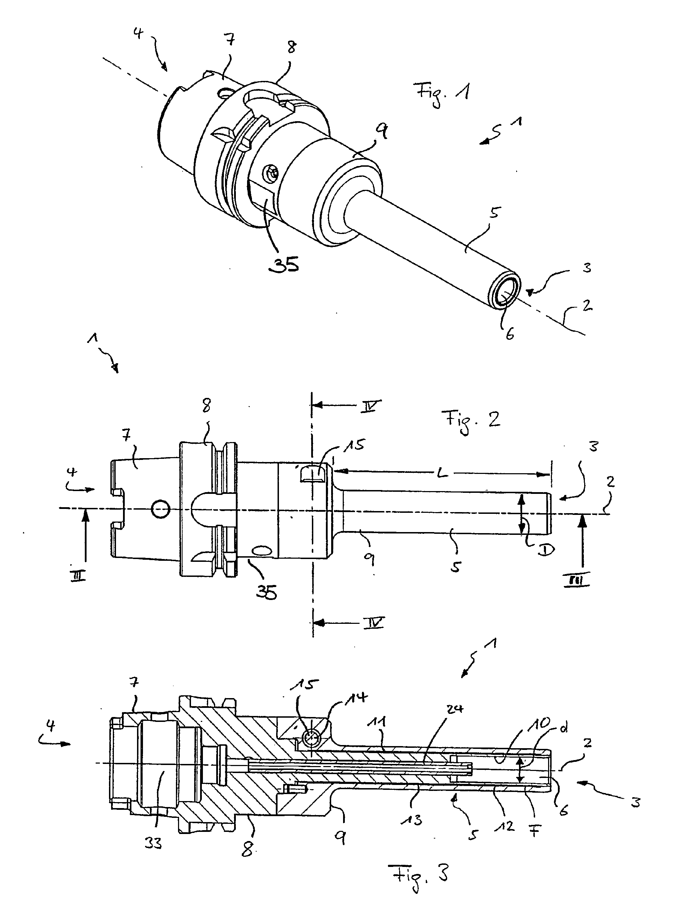

Das in den Fig. 1 bis 4 in unterschiedlichen Darstellungen gezeigte Hydraulik-Dehnspannfutter (nachfolgend kurz Dehnspannfutter 1) dient zum Einspannen eines (nicht dargestellten) drehangetriebenen Werkzeugs, insbesondere eines Bohrers oder Fräsers an der Antriebsspindel einer (ebenfalls nicht dargestellten) Werkzeugmaschine. Das Dehnspannfutter 1 ist im Wesentlichen rotationssymmetrisch bezüglich einer die Drehachse bildenden Spannfutterachse 2 ausgebildet und weist, in Richtung dieser Spannfutterachse 2 gesehen, ein werkzeugseitiges Ende 3 und eine maschinenseitiges Ende 4 auf. In der Umgebung des werkzeugseitigen Endes 3 ist das Dehnspannfutter 1 zu einem langgestreckten und schmalen Halsbereich 5 ausgezogen, der freiendseitig eine Aufnahme 6 für das Werkzeug aufweist. Die axiale Länge L des Halsbereichs 5 beträgt dabei das Vier- bis Fünffache des Außendurchmessers D. In bevorzugter Dimensionierung beträgt die Länge L 100 mm bei einem Außendurchmesser von 20 mm und einem Innendurchmesser d der Aufnahme 6 von 12 mm. Eine noch längere und/oder schmälere Bauform des Dehnspannfutters 1 oder ein noch geringer Innendurchmesser d ist jedoch auch realisierbar. Das maschinenseitige Ende 4 ist mit einem z.B. als HSK-Schaft ausgeführten Befestigungskonus 7 zum Anschluss des Dehnspannfutters 1 an der Antriebsspindel versehen.

Das Dehnspannfutter 1 ist im Wesentlichen zweiteilig aufgebaut und umfasst einen zentralen Grundkörper 8, auf dessen werkzeugseitigen Bereich eine etwa glockenförmige Spannhülse 9 aufgesetzt ist. Der Grundkörper 8 und die Spannhülse 9 sind sowohl werkzeugseitig als auch maschinenseitig miteinander hartverlötet und somit starr und druckdicht verbunden.

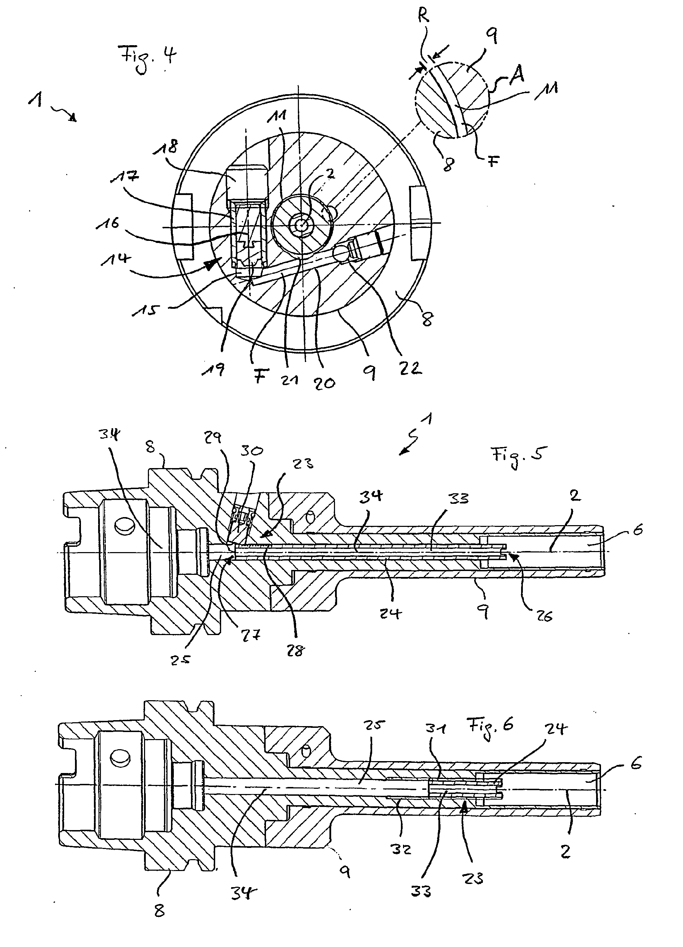

Im Bereich der Aufnahme 6 ist der Grundkörper 8 hohlzylindrisch und dünnwandig ausgebildet. Dieser dünnwandige Bereich des Grundkörpers 8 ist als Dehnbuchse 10 bezeichnet. Die Dehnbuchse 10 ist bevorzugt einstückig mit dem Grundkörper 8 ausgebildet, kann jedoch auch aus einem separaten Teil gebildet sein. Zwischen der Innenwand der Spannhülse 9 und der gegenüberliegenden Außenwand des Grundkörpers 8 im Halsbereich 5 ist ein Ringspalt 11 ausgebildet. Dieser Ringspalt 11 weist nur eine äußerst geringe Radialausdehnung R von vorzugsweise 0,1 mm (entsprechend etwa einem Zehntel der Wandstärke der Dehnbuchse 10) auf und ist deshalb aus Gründen der Auflösung nur in der vergrößerten Fig. 4, und hier vor allem in der nochmals vergrößerten Detaildarstellung A, als solcher zu erkennen. In Fig. 3 ist der Ringspalt 11 nur als verbreiterte schwarze Linie andeutungsweise sichtbar.

Der Ringspalt 11 erstreckt sich in axialer Richtung über einen Großteil der Länge der Spannhülse 9 und bildet im Bereich der Aufnahme 6 eine Druckkammer 12, in der ein flüssiges Druckmedium F, insbesondere ein Öl, aufgenommen ist. Der in Richtung des maschinenseitigen Endes 4 über die Druckkammer 12 hinaus verlängerte Bereich des Ringspalts 11 bildet ein Druckleitsystem 13, das die Druckkammer 12 fluidisch mit einer bezüglich der Druckkammer 12 axial versetzten Druckerzeugungseinheit 14 verbindet und damit eine Druckübertragung von der Druckerzeugungseinrichtung 14 in die Druckkammer 12 ermöglicht. Die Radialausdehnung R ist in unbelastetem Zustand über die gesamte Länge des Ringspalts 11 im Wesentlichen gleich, so dass die Druckkammer 12 übergangslos in das Druckleitsystem 13 übergeht.

Wie insbesondere aus Fig. 4 hervorgeht, umfasst die Druckerzeugungseinheit 14 eine Zylinderbohrung 15, in welcher ein Druckkolben 16 angeordnet ist. Der Druckkolben 16 ist entweder direkt in der Zylinderbohrung 16 oder - wie in Fig. 4 dargestellt - in einer in die Zylinderbohrung 15 eingesetzten Hülse 17 verstellbar geführt. Der Druckkolben 16 ist mittels einer Spannschraube 18 zu betätigen. Das innere Ende des Druckkolbens 16 trägt eine Dichtung 19 aus einem elastischen Material, insbesondere einem Gummielastomer. Die Druckerzeugungseinrichtung 14 umfasst weiterhin eine Befüllungsbohrung 20, die von dem inneren Ende der Zylinderbohrung 15 derart abgewinkelt verläuft, dass sie den Ringspalt 11 etwa tangiert. Die Befüllungsbohrung 20 ist somit sowohl mit der Zylinderbohrung 15 als auch über eine Verbindungsnut 21 mit dem Ringspalt 11 fluidisch verbunden. Durch eine Kugeldichtung 22 ist die Befüllungsbohrung 20 gegenüber der Außenwelt druckdicht abgeschlossen.

Vor Inbetriebnahme des Dehnspannfutters 1 wird zunächst das gemeinsame Volumen des Druckzylinders 15, der Befüllungsbohrung 20 und des Ringspalts 11 über die geöffnete Befüllungsbohrung 20 vollständig mit dem flüssigen Druckmedium F befüllt. Zur Vermeidung von Luftblasen im Drucksystem geschieht dies unter Vakuum. Nach Befüllung wird die Befüllungsbohrung durch die Kugeldichtung 22 druckdicht abgeschlossen. Zum Einspannen eines in die Aufnahme 6 eingelegten Werkzeuges kann nun mittels eines Schraubendrehers die Spannschraube 18, und damit der Druckkolben 16 in der Zylinderbohrung 15 verstellt und so das mit dem Druckmedium F gefüllte Volumen der Zylinderbohrung 15 verkleinert werden. Hierdurch kann auf das Druckmedium F ein hydrostatischer Druck von typischerweise bis zu 1000 bar appliziert werden. Dieser Druck wird über den Ringspalt 11 als Druckleitsystem 13 bis in den Bereich der Druckkammer 12 übertragen. Hier bewirkt der hydrostatische Druck eine radial nach innen auf die Spannfutterachse 2 gerichtete Verformung der dünnwandigen Dehnbuchse 10, durch welche das eingelegte Werkzeug in der Aufnahme 6 eingespannt wird. Aufgrund der demgegenüber vergleichsweise großen Wandstärke der die Druckkammer 12 außenseitig begrenzenden Spannhülse 9 tritt dagegen am Außenumfang des Dehnspannfutters 1 keine signifikante Verformung durch die Druckwirkung auf.

Zum Entfernen des Werkzeugs aus dem Dehnspannfutter 1 wird der Druckkolben 16 wieder um einige Umdrehungen der Spannschraube 18 zurückgestellt, wodurch das Druckmedium F entlastet wird. Die elastisch verformte Dehnbuchse 10 nimmt dabei wieder ihre ursprüngliche Form an, so dass das Werkzeug entnommen werden kann.

Das Dehnspannfutter 1 umfasst des Weiteren eine Axialjustierungseinheit 23 für das Werkzeug, die in der gegenüber Fig. 3 gedrehten Längsschnittdarstellung gemäß Fig. 5 besonders gut zu erkennen ist. Die Axialjustierung 23 umfasst einen etwa hohlzylindrischen Stellzapfen 24, der in einer zentralen Bohrung 25 des Grundkörpers 8 gleitend geführt ist. Das werkzeugseitige Ende 26 des Stellzapfens 24 ragt dabei in die Aufnahme 6 hinein und bildet somit einen axialen Anschlag für das in die Aufnahme 6 einzusetzende Werkzeug. Um den Stellzapfen 24, und damit den Anschlag für das Werkzeug, in axialer Richtung verstellen zu können, ist der Stellzapfen 24 nahe seines maschinenseitigen Endes 27 mit einer axial-linearen Zahnung 28 versehen. Diese Zahnung 28 kämmt mit einem Spiralgewinde 29, das endseitig an einer im Wesentlichen radial bezüglich der Spannfutterachse 2 im Grundkörper 8 geführten Stellschraube 30 angebracht ist. Ein Vorteil dieser Konstruktion liegt darin, dass die radiale Stellschraube 30 auch dann zugänglich ist, wenn ein Werkzeug in die Aufnahme 6 eingelegt ist.

Bei einer in Fig. 6 gezeigten, konstruktiv vereinfachten Variante der Axialjustierungseinheit 23 ist der Stellzapfen 24 mit einem Außengewinde 31 versehen, das mit einem Innengewinde 32 der Bohrung 25 korrespondiert. Bei dieser Ausführungsform ist der Stellzapfen 24 mittels eines in die Aufnahme 6 eingeführten Schraubendrehers verstellbar.

Entlang der Spannfutterachse 2 ist bei beiden beschriebenen Ausführungsformen des Dehnspannfutters 1 durch die Bohrung 25 und eine fluchtende Bohrung 33 des Stellzapfens 24 eine Durchführung 34 gebildet, die insbesondere als Kühlmittelkanal nutzbar ist, durch welchen von der Werkzeugmaschine während des Betriebs Kühlmittel in den Bereich der Aufnahme 6 und damit in den Bereich des Werkzeugs geleitet werden kann.

Am Umfang des Grundkörpers 8 ist weiterhin eine Wuchtfläche 35, d.h. eine die Axialsymmetrie des Grundkörpers 8 gezielt berechnende flächige Abfräsung vorgesehen, mit welcher eine durch die unsymmetrische Druckerzeugungseinheit 14 erzeugte Unwucht präzise kompensiert wird. Auf diese Weise wird im Betrieb des Dehnspannfutters 1 auch bei vergleichsweise hohen Umdrehungszahlen ein hochgenauer runder Lauf erzielt, was insbesondere angesichts der langen, schmalen Bauweise von besonderer Wichtigkeit ist. Anstelle der eingefrästen Wuchtfläche 35 kann auch eine mit dem Grundkörper 8 verschraubte Wuchtschraube, eine oder mehrere Wuchtscheiben oder sonstige Ausfräsungen oder Bohrungen vorgesehen sein.

### Bezugszeichenliste

- 1: (Hydraulik-)Dehnspannfutter
- 2: Spannfutterachse
- 3: (werkzeugseitiges) Ende
- 4: (maschinenseitiges) Ende
- 5: Halsbereich
- 6: Aufnahme
- 7: Befestigungskonus
- 8: Grundkörper
- 9: Spannhülse
- 10: Dehnbuchse
- 11: Ringspalt
- 12: Druckkammer
- 13: Druckleitsystem
- 14: Druckerzeugungseinheit
- 15: Zylinderbohrung
- 16: Druckkolben
- 17: Buchse
- 18: Spannschraube
- 19: Dichtung
- 20: Befüllungsbohrung
- 21: Verbindungsnut
- 22: Kugeldichtung
- 23: Axialjustierungseinheit
- 24: Stellzapfen
- 25: Bohrung
- 26: (werkzeugseitiges) Ende
- 27: (maschinenseitiges) Ende
- 28: Zahnung
- 29: Spiralgewinde
- 30: Stellschraube
- 31: Außengewinde
- 32: Innengewinde
- 33: Bohrung
- 34: Durchführung
- 35: Wuchtfläche

- L: Länge
- D: Außendurchmesser
- d: Innendurchmesser
- R: Radialausdehnung
- F: Druckmedium
- A: Detaildarstellung

## Patentansprüche

1. Hydraulik-Dehnspannfutter (1) mit einer an dessen werkzeugseitigem Ende (3) angeordneten, von einer Druckkammer (12) umgebenen Dehnbuchse (10), die unter Wirkung eines in der Druckkammer (12) aufgenommenen Druckmediums (F) zur Einspannung eines Werkzeugs radial verformbar ist, mit einer axial bezüglich einer Spannfutterachse (2) von der Dehnbuchse (10) beabstandeten Druckerzeugungseinheit (14) und einem Druckleitsystem (13) zur Druckübertragung von der Druckerzeugungseinheit (14) zu der Druckkammer (12),
**dadurch gekennzeichnet,**
**dass** das Druckleitsystem (13) durch einen zu der Spannfutterachse (2) konzentrischen Ringspalt (11) gebildet ist.

2. Dehnspannfutter (1) nach Anspruch 1,
**gekennzeichnet durch**
einen bezüglich der Spannfutterachse (2) zentralen, die Dehnbuchse (10) tragenden Grundkörper (8) und eine diesen konzentrisch umgebende Spannhülse (9), wobei die Druckkammer (12) und das Druckleitsystem (13) zwischen dem Grundkörper (8) und der Spannhülse (9) gebildet sind.

3. Dehnspannfutter (1) nach Anspruch 1 oder 2,
**dadurch gekennzeichnet,**
**dass** der Grundkörper (8) und die Spannhülse (9) starr und druckdicht miteinander verbunden sind.

4. Dehnspannfutter (1) nach einem der Ansprüche 1 bis 3,
**dadurch gekennzeichnet,**
**dass** die Druckerzeugungseinheit (14) in der Spannhülse (9) angeordnet ist.

5. Dehnspannfutter (1) nach einem der Ansprüche 1 bis 4,
**dadurch gekennzeichnet,**
**dass** die Druckerzeugungseinheit (14) eine Zylinderbohrung (15) mit einem darin verstellbaren Druckkolben (16) sowie eine Befüllungsbohrung (20) umfasst, welche die Zylinderbohrung (15) mit dem Druckleitsystem (13) verbindet.

6. Dehnspannfutter (1) nach Anspruch 5,
**dadurch gekennzeichnet,**
**dass** der Druckkolben (16) mittels einer Spannschraube (18) verstellbar ist.

7. Dehnspannfutter (1) nach einem der Ansprüche 1 bis 6,
**dadurch gekennzeichnet,**
**dass** die Spannhülse (9) werkzeugseitig einen langgestreckten, dünnen Halsbereich (5) aufweist, dessen axiale Länge (L) mindestens das Vierfache seines Außendurchmessers (D) beträgt.

8. Dehnspannfutter (1) nach Anspruch 7,
**dadurch gekennzeichnet,**
**dass** die axiale Länge des Halsbereichs (L) mindestens 100 mm beträgt.

9. Dehnspannfutter (1) nach einem der Ansprüche 1 bis 8,
**dadurch gekennzeichnet,**
**dass** die Radialausdehnung (R) des Ringspalts (11) höchstens 0,2 mm beträgt.

10. Dehnspannfutter (1) nach einem der Ansprüche 1 bis 9,
**dadurch gekennzeichnet,**
**dass** der Grundkörper (8) eine zentrale Durchführung (34) aufweist.

11. Dehnspannfutter (1) nach einem der Ansprüche 1 bis 10,
**gekennzeichnet durch**
eine Axialjustierungseinheit (23) für das Werkzeug.

12. Dehnspannfutter (1) nach Anspruch 11,
**dadurch gekennzeichnet,**
**dass** die Axialjustierungseinheit (23) einen bezüglich des Grundkörpers (8) axialverstellbaren Stellzapfen (24) umfasst, der einen axialen Anschlag für das Werkzeug bildet.

13. Dehnspannfutter (1) nach Anspruch 12,
**dadurch gekennzeichnet,**
**dass** der Stellzapfen (24) in einer zentralen Bohrung (25) des Grundkörpers (8) geführt ist.

14. Dehnspannfutter (1) nach Anspruch 13,
**dadurch gekennzeichnet,**
**dass** der Stellzapfen (24) mit einem Außengewinde (31) versehen ist, das mit einem Innengewinde (32) der Bohrung (25) zur Axialverstellung des Stellzapfens (24) zusammenwirkt.

15. Dehnspannfutter (1) nach Anspruch 13,
**dadurch gekennzeichnet,**
**dass** der Stellzapfen (24) eine axial-lineare Zahnung (28) aufweist, die mit einem Spiralgewinde (29) einer im Wesentlichen radial bezüglich der Spannfutterachse (2) in dem Grundkörper (8) geführten Stellschraube (30) zur Axialverstellung des Stellzapfens (24) zusammenwirkt.

16. Dehnspannfutter (1) nach einem der Ansprüche 1 bis 15.
**gekennzeichnet durch**,
eine in einen Umfangsbereich eingefräste Wuchtfläche (35) zur Kompensation einer **durch** die Druckerzeugungseinheit (14) verursachten Unwucht.

## Claims

1. Hydraulic expanding chuck (1) comprising an expanding bush (10) which is arranged on its tool-side end (3), is surrounded by a pressure chamber (12) and can be radially deformed under the effect of a pressure medium (F), accommodated in the pressure chamber (12), for chucking a tool, comprising a pressure-generating unit (14) spaced apart from the expanding bush (10) axially with respect to a chuck axis (2), and comprising a pressure-directing system (13) for transmitting pressure from the pressure-generating unit (14) to the pressure chamber (12), **characterized in that** the pressure-directing system (13) is formed by an annular gap (11) concentric to the chuck axis (2).

2. Expanding chuck (1) according to Claim 1, **characterized by** a basic body (8) that is central with respect to the chuck axis (2) and carries the expanding bush (10) and by a chucking sleeve (9) concentrically surrounding said basic body (8), wherein the pressure chamber (12) and the pressure-directing system (13) are formed between the basic body (8) and the chucking sleeve (9) .

3. Expanding chuck (1) according to Claim 1 or 2, **characterized in that** the basic body (8) and the chucking sleeve (9) are rigidly connected to one another in a pressure-tight manner.

4. Expanding chuck (1) according to one of Claims 1 to 3, **characterized in that** the pressure-generating unit (14) is arranged in the chucking sleeve (9).

5. Expanding chuck (1) according to one of Claims 1 to 4, **characterized in that** the pressure-generating unit (14) comprises a cylinder bore (15) having a pressure piston (16) adjustable therein and also a filling bore (20) which connects the cylinder bore (15) to the pressure-directing system (13).

6. Expanding chuck (1) according to Claim 5, **characterized in that** the pressure piston (16) can be adjusted by means of a tightening screw (18).

7. Expanding chuck (1) according to one of Claims 1 to 6, **characterized in that** the chucking sleeve (9) has on the tool side an elongated, thin neck region (5), the axial length (L) of which is at least four times its outside diameter (D).

8. Expanding chuck (1) according to Claim 7, **characterized in that** the axial length of the neck region (L) is at least 100 mm.

9. Expanding chuck (1) according to one of Claims 1 to 8, **characterized in that** the radial extent (R) of the annular gap (11) is at most 0.2 mm.

10. Expanding chuck (1) according to one of Claims 1 to 9, **characterized in that** the basic body (8) has a central passage (34).

11. Expanding chuck (1) according to one of Claims 1 to 10, **characterized by** an axial adjusting unit (23) for the tool.

12. Expanding chuck (1) according to Claim 11, **characterized in that** the axial adjusting unit (23) comprises an adjusting pin (24) which can be axially adjusted relative to the basic body (8) and which forms an axial stop for the tool.

13. Expanding chuck (1) according to Claim 12, **characterized in that** the adjusting pin (24) is guided in a central bore (25) of the basic body (8).

14. Expanding chuck (1) according to Claim 13, **characterized in that** the adjusting pin (24) is provided with an external thread (31) which interacts with an internal thread (32) of the bore (25) for the axial adjustment of the adjusting pin (24).

15. Expanding chuck (1) according to Claim 13, **characterized in that** the adjusting pin (24) has an axial-linear tooth system (28) which interacts with a spiral thread (29) of an adjusting screw (30) for the axial adjustment of the adjusting pin (24), said adjusting screw (30) being guided in the basic body (8) substantially radially relative to the chuck axis (2).

16. Expanding chuck (1) according to one of Claims 1 to 15, **characterized by** a balancing surface (35) milled into a circumferential region for compensating for unbalance caused by the pressure-generating unit (14).

## Revendications

1. Mandrin de serrage extensible hydraulique (1), comprenant une douille extensible (10) disposée à son extrémité (3) du côté de l'outil, entourée par une chambre de pression (12), qui peut être déformée radialement sous l'effet d'un fluide de pression (F) reçu dans la chambre de pression (12) pour le serrage d'un outil, une unité de génération de pression (14) espacée de la douille extensible (10) axialement par rapport à un axe de mandrin de serrage (2) et un système de direction de la pression (13) pour transférer la pression de l'unité de génération de pression (14) à la chambre de pression (12),
**caractérisé en ce que**
le système de direction de la pression (13) est formé par une fente annulaire (11) concentrique à l'axe du mandrin de serrage (2).

2. Mandrin de serrage extensible (1) selon la revendication 1,
**caractérisé par**
un corps de base (8) central par rapport à l'axe du mandrin de serrage (2), portant la douille extensible (10), et un manchon de serrage (9) entourant celui-ci concentriquement, la chambre de pression (12) et le système de direction de la pression (13) étant formés entre le corps de base (8) et le manchon de serrage (9).

3. Mandrin de serrage extensible (1) selon la revendication 1 ou 2,
**caractérisé en ce que**
le corps de base (8) et le manchon de serrage (9) sont connectés l'un à l'autre rigidement et de manière étanche à la pression.

4. Mandrin de serrage extensible (1) selon l'une quelconque des revendications 1 à 3,
**caractérisé en ce que**
l'unité de génération de pression (14) est disposée dans le manchon de serrage (9).

5. Mandrin de serrage extensible (1) selon l'une quelconque des revendications 1 à 4,
**caractérisé en ce que**
l'unité de génération de pression (14) comprend un alésage de cylindre (15) contenant un piston de pression (16) déplaçable à l'intérieur de celui-ci, ainsi qu'un alésage de remplissage (20), qui relie l'alésage de cylindre (15) au système de direction de la pression (13).

6. Mandrin de serrage extensible (1) selon la revendication 5,
**caractérisé en ce que** le piston de pression (16) peut être déplacé au moyen d'une vis de serrage (18).

7. Mandrin de serrage extensible (1) selon l'une quelconque des revendications 1 à 6,
**caractérisé en ce que**
le manchon de serrage (9) présente, du côté de l'outil, une région de col mince allongée (5), dont la longueur axiale (L) vaut au moins quatre fois son diamètre extérieur (D).

8. Mandrin de serrage extensible (1) selon la revendication 7,
**caractérisé en ce que**
la longueur axiale de la région de col (L) vaut au moins 100 mm.

9. Mandrin de serrage extensible (1) selon l'une quelconque des revendications 1 à 8,
**caractérisé en ce que**
l'extension radiale (R) de la fente annulaire (11) vaut au maximum 0,2 mm.

10. Mandrin de serrage extensible (1) selon l'une quelconque des revendications 1 à 9,
**caractérisé en ce que**
le corps de base (8) présente un passage central (34) .

11. Mandrin de serrage (1) selon l'une quelconque des revendications 1 à 10,
**caractérisé par**
une unité d'ajustement axial (23) pour l'outil.

12. Mandrin de serrage extensible (1) selon la revendication 11,
**caractérisé en ce que**
l'unité d'ajustement axial (23) comprend un tourillon de réglage (24) déplaçable axialement par rapport au corps de base (8), qui forme une butée axiale pour l'outil.

13. Mandrin de serrage extensible (1) selon la revendication 12,
**caractérisé en ce que**
le tourillon de réglage (24) est guidé dans un alésage central (25) du corps de base (8).

14. Mandrin de serrage extensible (1) selon la revendication 13,
**caractérisé en ce que**
le tourillon de réglage (24) est pourvu d'un filetage extérieur (31) qui coopère avec un filetage intérieur (32) de l'alésage (25) pour le déplacement axial du tourillon de réglage (24).

15. Mandrin de serrage extensible (1) selon la revendication 13,
**caractérisé en ce que**
le tourillon de réglage (24) présente une denture axialement linéaire (28) qui coopère avec un filetage spiral (29) d'une vis de réglage (30) guidée essentiellement radialement par rapport à l'axe du mandrin de serrage (2) dans le corps de base (8), pour le déplacement axial du tourillon de réglage (24).

16. Mandrin de serrage extensible (1) selon l'une quelconque des revendications 1 à 15,
**caractérisé par**
une surface d'équilibrage (35) fraisée dans une région périphérique pour compenser un déséquilibre provoqué par l'unité de génération de pression (14).
